# EUROPEAN PATENT APPLICATION

(11) **EP 4 498 264 A1**
(43) Date of publication of application: **29.01.2025**
(21) Application number: 23795661.0
(22) Date of filing: 28.04.2023
(51) Int. Cl.: G06F 16/957

(54) **INFORMATION DISPLAY METHOD AND APPARATUS, ELECTRONIC DEVICE, AND STORAGE MEDIUM**

(30) Priority: 29.04.2022 CN 202210475697
(71) Applicant: Beijing Youzhuju Network Technology Co. Ltd, Beijing 101299 (CN)
(72) Inventor: YU, Youjie, Beijing 100028 (CN); XU, Liangcheng, Beijing 100028 (CN); JIN, Tian, Beijing 100028 (CN); SUN, Menghan, Beijing 100028 (CN)
(74) Representative: Dentons UK and Middle East LLP
(86) International application number: PCT/CN2023/091833
(87) International publication number: WO 2023/208229

(57) **Abstract**

The disclosure provides a method, apparatus, an electronic device, and a storage medium for information display. The method comprises: detecting a first operation for a panel hot zone in a target page, the target page comprising a video region and a panel hot zone, and the video region being used for displaying a target video; and in response to the first operation, displaying an information region in the target page, and adjusting a display mode of the video region, wherein the information region is used to display detailed information of a target object corresponding to the target video. A user can obtain complete content of an object in one page, without the need to open a detailed page of the object, which is convenient to operate and improves user experiences.

## Description

This application claims priority to Chinese Patent Application No. CN202210475697.2, filed on April 29, 2022 and entitled "METHOD, APPARATUS, ELECTRONIC DEVICE AND STORAGE MEDIUM FOR INFORMATION DISPLAY".

### FIELD

The present disclosure relates to the field of page processing techniques, and in particular, to a method, apparatus, an electronic device, and a storage medium for information display.

### BACKGROUND

At present, when video content of an object is displayed in a page, an object card is usually displayed in a specific region of an upper layer. When a user wants to view detailed information about the object, the user needs to click on the object card to open a detailed page of the object via a hyperlink. Such operations are complicated and cause a lot of pages to be opened, which is inconvenient to check various information.

### SUMMARY

In view of this, the present disclosure aims to propose a method, apparatus, an electronic device, and a storage medium for information display.

With respect to the above, the present disclosure provides a method of information display comprising:
detecting a first operation for a panel hot zone in a target page, the target page comprising a video region and the panel hot zone, and the video region being used for displaying a target video; and
in response to the first operation, displaying an information region in the target page, and adjusting a display mode of the video region, wherein the information region is used to display detailed information about a target object corresponding to the target video.

Optionally, the adjusting a displaying manner of the video region includes:
reducing a display area of the video region in the target page, wherein the reduced video region is used for displaying the content associated with the target video.

Optionally, the adjusting a displaying manner of the video region includes:
adjusting the video region into a video play control, wherein the video play control is used for displaying the video region in the target page in response to a trigger operation.

Alternatively, the first operation includes a sliding operation, and displaying the information region in the target page in response to the first operation includes:
in response to the sliding operation, determining a sliding distance corresponding to the sliding operation;
determining a target display area of the information region based on the sliding distance; and
displaying the information region in the target page, wherein a display area of the information region in the target page is the target display area.

Alternatively, the determining a target display area of the information region based on the sliding distance includes:
if the sliding distance is less than or equal to a predetermined distance threshold, determining the target display area of the information region based on the sliding distance;
if the sliding distance is greater than the predetermined distance threshold, determining the target display area of the information region based on the distance threshold.

Alternatively, the panel hot zone is an information region for displaying the basic information of the target object, and displaying the information region in the target page in response to the first operation comprises:
in response to the first operation, increasing a display area of the information region in the target page; and adjusting content displayed in the increased information region to be the detailed information about the target object corresponding to the target video.

Optionally, the target video comprises at least one video clip, each video clip is used for presenting detailed information of the target object, and respective video clips display different detailed information; wherein in response to that the target video is displayed in the video region, the video region is provided with at least one content control and a progress bar corresponding to each content control, each content control respectively corresponding to a video clip, each content control being used for triggering the playing of a corresponding video clip, and the progress bar being used for displaying a playing progress of the video clip which is triggered to be played.

Optionally, the method further includes:
screening out a comment of the target object according to a predetermined rule; and
in response to that the target video is displayed in the video region, displaying the comment in a predetermined sub-region within the video region.

On the basis of the same concept, the present disclosure further provides an apparatus for information display, comprising:
a detecting module configured for detecting a first operation for a panel hot zone in a target page, the target page comprising a video region and the panel hot zone, and the video region being used for displaying a target video; and
a display adjusting module configured for displaying an information region in the target page in response to the first operation, and adjusting a display mode of the video regio, wherein the information region is used to display detailed information about a target object corresponding to the target video.

On the basis of the same concept, the present disclosure also provides an electronic device comprising a memory, a processor and a computer program stored in the memory and operable on the processor. The processor, when executing the program, implements any of the methods as discussed above.

On the basis of the same concept, the present disclosure further provides a non-transitory computer readable storage medium. The non-transitory computer readable storage medium stores computer instructions, and the computer instructions are used to cause a computer to implement any of the methods as discussed above.

It may be seen from the above, for the method, apparatus, electronic device and storage medium for information display provided in the present disclosure, if a page includes a video region and a panel hot zone, and if the panel hot zone is triggered, an information region including detailed information about an object may be displayed on the page. In this way, detailed information about an object may be obtained in a single page, without the need to further open a detailed page of the object, which is convenient to operate and improves user experiences.

### BRIEF DESCRIPTION OF THE DRAWINGS

To describe the technical solutions in the present disclosure or the related art more clearly, the following briefly introduces the accompanying drawings required for describing the embodiments or the related art. Apparently, the accompanying drawings in the following description show merely embodiments of the present disclosure, and a person of ordinary skill in the art may still derive other drawings from these accompanying drawings without creative efforts.
FIG. 1 is a schematic diagram of an example page of a conventional solution;
FIG. 2 is a schematic diagram of an application scenario according to an embodiment of the present disclosure;
FIG. 3 is a schematic flowchart of a method according to an embodiment of the present disclosure;
FIG. 4 is a schematic diagram of an example page according to an embodiment of the present disclosure;
FIG. 5 is a schematic diagram of an example page according to an embodiment of the present disclosure;
FIG. 6 is a schematic diagram of an example page according to an embodiment of the present disclosure;
FIG. 7 is a schematic diagram of an example page according to an embodiment of the present disclosure;
FIG 8 is a schematic diagram of an example page according to an embodiment of the present disclosure;
FIG. 9 is a schematic structural diagram of an apparatus according to an embodiment of the present disclosure; and
FIG. 10 is a schematic structural diagram of an electronic device according to an embodiment of the present disclosure.

### DETAILED DESCRIPTION

The principles and spirit of the present disclosure will be described below with reference to example embodiments. It should be understood that these embodiments are given merely to enable those skilled in the art to better understand and further implement the present disclosure, but not to limit the scope of the present disclosure in any way. Rather, these embodiments are provided so that this disclosure will be thorough and complete, and will fully convey the scope of the disclosure to those skilled in the art.

According to embodiments of the present disclosure, a method, an apparatus, an electronic device, and a storage medium of information display are provided.

In this document, it should be understood that any number of elements in the drawings is used as an example and not a limitation, and that any name is only used for differentiating without suggesting any limitation.

The principles and spirit of the present disclosure are explained in detail below with reference to several representative embodiments of the present disclosure.

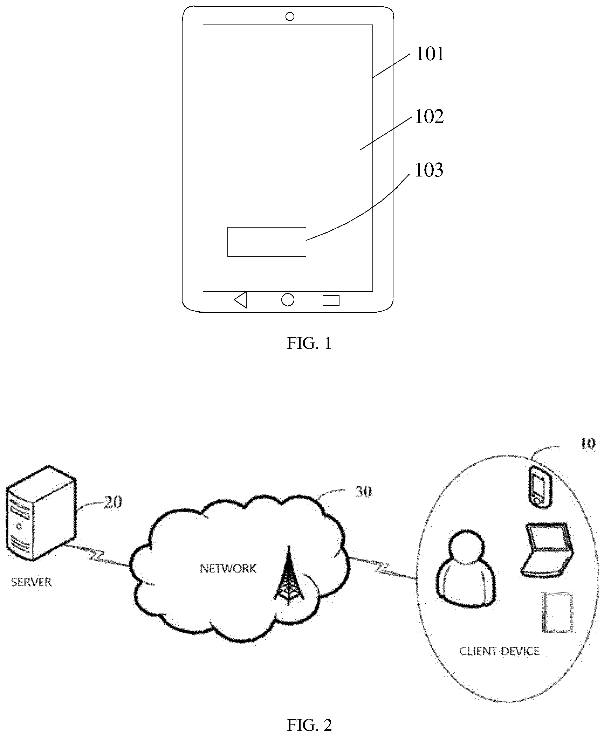

In related solutions, as shown in FIG. 1, when video content 102 of a product is displayed on the page 101, a product card 103 is usually displayed on a specific region of the page at the same time. When browsing the video content 102 of the product, if a user is interested in the product, the user may click the product card 103, enter a details page of the product via a hyperlink, further check detailed information about the product on the details page, and perform related operations, such as purchasing a product, adding to a shopping cart, etc. The information displayed on the product card 103 is very limited, which is disadvantageous for the user to obtain relevant information about the product. Only after clicking to enter a details page, various information about the product may be obtained. Such operations are inconvenient and the user experience is poor. Moreover, a plurality of pages need to be opened, thereby occupying resources.

In order to solve the above problem, the present disclosure provides a method of information display. The page includes a video region and a panel hot zone of a product. When an operation is performed for the panel hot zone, an information region capable of displaying detailed information about the product is displayed on the page, so that a detailed page of the product does not need to be opened additionally. The operations are convenient, and the user can fully know product information in one page, thereby improving user experiences.

Referring to FIG. 2, it is a schematic diagram of an application scenario of a method of information display according to an embodiment of the present disclosure. The application scenario includes a client device 10 and a server 20. The client device 10 may be connected to the server 20 via a network 30 to implement data interaction.

Optionally, the client device 10 may be an electronic device with data transmission and multimedia input/output functions near a user side, such as a computer, a tablet computer, a smart phone, a vehicle-mounted computer, and a wearable device. The electronic device may comprise a processor and a display screen, wherein the display screen is used for presenting a graphical user interface, and the graphical user interface may be a shopping page in a social application program. The processor is configured to process relevant data in a social networking application, generate a graphical user interface, and control display of the graphical user interface on a display screen.

Optionally, the server 20 may be an independent physical server, may also be a server cluster or a distributed system formed by a plurality of physical servers, and may also be a cloud server that provides basic cloud computing services such as cloud services, cloud databases, cloud computing, cloud functions, cloud storage, network services, cloud communications, middleware services, domain name services, security services, CDNs, and big data and artificial intelligence platforms. The server 20 may provide data storage and data processing support for the working of social applications at the user side. Relevant data of all registered users in the social application program may be stored in the server 20, and is sent to the client device 10 according to calling requirements of the client device 10. When a data processing requirement is generated in the social application program, the to-be-processed data may also be sent to the server 20, and the server 20 returns a result to the client device 10 after processing.

The method of information display according to an example embodiment of the present disclosure will be described below with reference to an application scenario of FIG. 2. It should be noted that the foregoing application scenarios are merely shown for facilitating understanding of the spirit and principle of the present disclosure, and the implementation of the present disclosure is not limited in this aspect. Rather, embodiments of the present disclosure may be applied to any scenario where it is applicable.

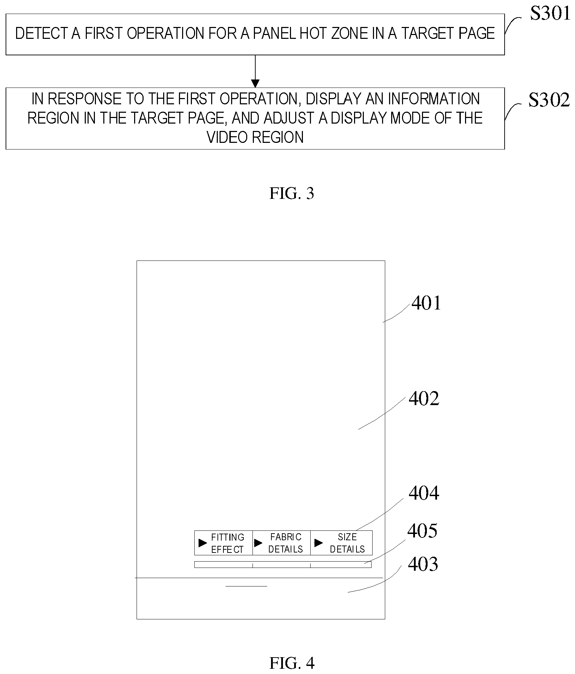

First of all, as shown in FIG. 3, an embodiment of the present disclosure provides a method of information display, comprising the following.

At S301, detect a first operation for a panel hot zone in a target page, whereby the target page comprises a video region and the panel hot zone, and the video region is used for displaying a target video.

In this embodiment, a target page is provided, and the manner of entering the target page may be arbitrary. For example, a certain application software may be initiated to enter the target page, or the target page may be entered from a certain entrance of the application software. The target page is used for displaying information related to a target object. In some embodiments, the target page may be a product live page or a product short video page providing a promotion function of the product, where information about the product is displayed on the product live page or the product short video page.

In some embodiments, a target page comprises a video region and a panel hot zone, where the video region is used for displaying a target video of a target object, and a panel hot zone is an region for a user to execute a trigger operation. When the user triggers the panel hot zone, an information region is displayed in a target page for displaying detailed information about a target object. A first operation for the panel hot zone may be a triggering operation such as a click operation, a sliding operation, etc. For example, in a live product page, a video region is used to play video content of commodities. If a user is interested in commodities being played live, and wants to know more information about the commodities, the user may perform a click or slide operation on the panel hot zone, so as to view more information about the commodities on a target page.

In some implementations, the video region and the panel hot zone in the target page may be arranged in a specific layout according to conditions, such as a page size, an object display manner and so on. The specific layout is not limited here. For example, the video region and the panel hot zone are arranged in an upper position and a lower position, and the display area of the video region is greater than the display area of the panel hot zone. Alternatively, the video region is arranged in the whole page, and the panel hot zone is set in a predetermined sub-region in the video region. The foregoing is only example description and is not intended to suggest any limitation to the layout mode of the page.

At S302, in response to the first operation, display an information region in the target page, and adjusting a display mode of a video region. The information region is used to display detailed information about the target object corresponding to the target video.

In this embodiment, when the first operation on the panel hot zone is detected, the information region is displayed in the target page, a display mode of a video region is adjusted. Detailed information about a target object is displayed in the displayed information region. The detailed information is various information on the target object, and the detailed information includes basic information on the target object, may also include basic information and additional information, where the basic information is key information about the target object, and the additional information is some information which is more informative other than the key information.

The display mode of the video region in the target page may be adjusting the display area of the video region in the target page, and the adjusted video region may still display the target video. The display mode of the video region in the target page may also be adjusting the video region to be a control, and the video region may be restored to be displayed after an operation is performed on the control. In some embodiments, in a live product page, a video content of a product is played in a video region; after an operation is performed on the panel hot zone, an information region is displayed in the page; and detailed information about the product, such as a name, price, logistics, a color, a size, an evaluation, a purchase action point (adding to a shopping cart, immediately purchasing, consulting a customer service, etc.) and all information related to the product, is displayed in the information region.

With reference to FIG. 4, in the method of information display provided in this embodiment, a target page 401 includes a video region 402 and a panel hot zone 403. The video region 402 is used for displaying a target video of an object. For example, in shopping application, video content of a product is played in the video region, and a user may know the appearance of the product based on the video content of the product. When an operation is triggered on the target page 401 with respect to the panel hot zone 403, the information region is displayed in the target page 401, and the display content of the information region is the detailed information about the object; and at the same time, the display mode of the video region 402 is adjusted, for example, reducing the region of the display area of the video region 402 in the page 401, and increasing the region of the display area of the information region, to facilitate the display of the detailed information about the object in the information region. In this way, on the page 401, the user performs an operation on the panel hot zone 403, so that detailed information about the product may be viewed without additionally opening a detailed page about the product, which is convenient to operate, and facilitates the user to fully know all the information about the product in one page.

In some embodiments, adjusting the display mode of a video region includes reducing the display area of the video region in a target page, where the reduced video region is used to display content associated with the target video.

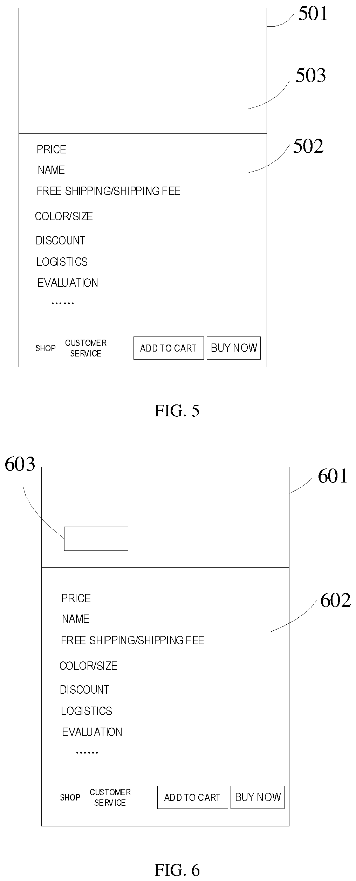

As shown in FIG. 5, after an operation is performed on a panel hot zone, an information region 502 is displayed on a target page 501. The display content of the information region 502 is detailed information about an object. The display area of a video region in the page 501 is reduced, and the reduced video region 503 displays content related to a target video. For example, in shopping application, after clicking a panel hot zone or performing a slide operation on the panel hot zone, the detailed information about the product is displayed in the information region 502. The video region is reduced at the same time, and the video content of the product is displayed in the reduced video region 503, or a certain frame in the video content of the product is displayed in the reduced video region 503. The frame may be a picture that may reflect a feature of the product, and may also be a current frame that is being played when the operation is performed on the panel hot zone. The content that may be displayed is not limited. In this way, video-related content and detailed information of an object (for example, a certain product) may be displayed in the same page, so that it is convenient to fully understand the object in one page.

In some approaches, the video region is arranged in the upper part of the target page and the information region is arranged in the lower part of the target page. The video region and the information region are adjacent to each other, increasing the display area of the information region, correspondingly reducing the display area of the video region. In the adjusted page layout mode, the video region can still display the video content of the object, and the enlarged information region can display detailed information about the object. Thus, the user may obtain information in which he is interested from the information region.

**In** some embodiments, adjusting the display mode of the video region includes: adjusting the video region to be a video playing control, where the video play control is used for displaying the video region in the target page in response to the trigger operation.

Referring to FIG. 6, after the operation is performed on the panel hot zone, the information region 602 is displayed on the target page 601. The display content of the information region 602 is the detailed information of the object, and the video region is adjusted to be the video play control 603. When an operation is performed on the video play control 603, the video region may be redisplayed in the target page 601. The target video is played in the redisplayed video region, and the state of the video region before adjustment may also be displayed in the target page 601. For example, in the process of playing a video content in a video region, an operation is performed on a panel hot zone, and the video region is adjusted to be a video play control 603, After the video playing control 603 is clicked, the video region is redisplayed, and the video content is continuously played in the redisplayed video region, The redisplayed video region may be a zoomed-out video region so that the target page 601 simultaneously displays the information region including the detailed information and the zoomed-out video region. For another example, after the video playing control 603 is clicked, the video region and the panel hot zone before adjustment are displayed on the target page 601, that is, the target page 601 directly returns to the display state in which the detailed information is not displayed (for example, the content in page shown in FIG. 4). The foregoing is an example description of the page display state after the video play control is operated, and is not specifically limited. By adjusting a video region to be a video playing control, and no video region is displayed in a page layout, as much detailed information as possible may be displayed in the page. At the same time, the video region may be redisplayed by operating the video playing control, so that the operation is convenient, and it is very convenient to view various pieces of information.

In some implementations, there are a variety of display manners for the video play control in the target page, for example, a play key for resuming playing the target video, a selection key for providing restoring the display mode of the video region (for example, two selection keys may be provided, in which one selection key is used for replaying a video, and another selection key is used for restoring to a display state of a video region which does not display the detailed information), a scrolling control key which provides quick browse of a target video, and so on. The specific forms of the control are not limited.

In some embodiments, the first operation comprises a sliding operation, and displaying an information region in a target page in response to the first operation includes:
in response to the sliding operation, determining a sliding distance corresponding to the sliding operation;
determining a target display area of the information region based on the sliding distance; and
displaying an information region in the target page, where the display area of the information region in the target page is the target display area.

In this embodiment, the user may view the detailed information of the object in the information region through a slide operation on the panel hot zone. in a sliding process, determining a sliding distance corresponding to a sliding operation, determining a target display area of an information region according to the sliding distance, and after the sliding operation, displaying the information region having the target display area in a page. Taking an upward slide as an example, in an upward slide process, a distance of the upward slide is determined, and a display area of the information region is determined according to the distance of the upward slide. The size of the information region is dynamically adjusted along with the sliding action, and the larger the upward sliding distance is, the larger the display area of the information region is, The more information that may be displayed in the information region, the more information that may be displayed in an object may be dynamically adjusted along with the upward sliding distance, The user may obtain more information about the product by constantly enlarging the information region until the information of interest is viewed, The upward slide operation may be stopped.

In some manners, in a process of performing a sliding operation on a panel hot zone, an information region dynamically adjusts the size of the region along with a sliding distance, and correspondingly, a video region dynamically adjusts the size of the region along with the sliding distance. For example, with regard to an upward slide of a panel hot zone, the larger the sliding distance, the larger the region of a display area of an information region, while the smaller the region of the display area of a video region, a video content displayed in the video region correspondingly adjusts a display ratio according to the change of the region, thereby realizing the effects of dynamically adjusting the display ratio of the video region and the information region in the same page and displaying the content in each region.

In some embodiments, determining a target display area of an information region based on a sliding distance includes:
if the sliding distance is less than or equal to a predetermined distance threshold, determining the target display area of the information region based on the sliding distance; and
if the sliding distance is greater than the predetermined distance threshold, determining the target display area of the information region based on the distance threshold.

In this embodiment, in order to ensure the integrity of the page display information, the display position of the information region is limited. in the process of a sliding operation of a panel hot zone, detecting a corresponding sliding distance, and if the sliding distance is less than or equal to a predetermined distance threshold value, determining a target display area of an information region in a page according to the sliding distance; if the sliding distance is greater than a predetermined distance threshold value, determining a target display area of the information region in the page according to the distance threshold value. That is, considering the integrity of the whole layout of the page, the display area of the information region in the page is limited, and when the sliding distance exceeds the distance threshold value, the maximized information region is displayed on the page.

In some embodiments, the panel hot zone is an information region for displaying basic information of the target object.

The displaying an information region in a target page in response to a first operation includes:
in response to a first operation, increasing a display area of an information region in a target page; and
adjusting content displayed in the increased information region to be the detailed information about the target object corresponding to the target video.

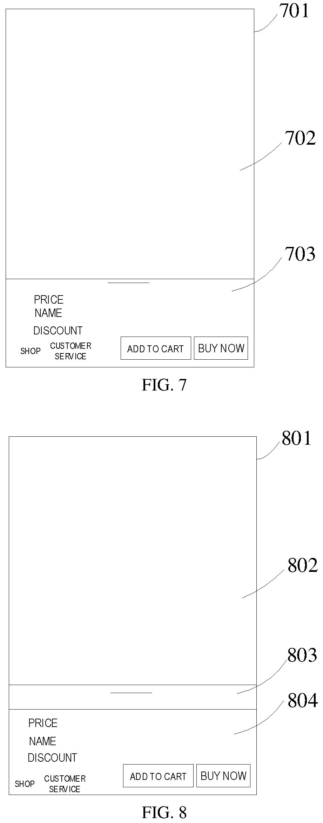

In conjunction with what is shown in FIG. 7, a target page 701 includes a video region 702 and a panel hot zone 703, and the panel hot zone 703 is also an information region for displaying basic information about an object. In this way, in the target page 701, a user may also obtain basic information about an object without operating the panel hot zone 703. For example, the basic information of an object is key information about purchasing a product. For example, the key information may comprise at least one piece of the following information: name information, price information, discount information, and action points such as consulting a customer service, adding to a shopping cart, and immediately purchasing. The user may directly obtain the key information of the product on the target page 701, and may quickly purchase the product. Compared with jumping to a product details page and querying information on the product details page and then purchasing a product, the proposed solution can effectively improve product purchase conversion efficiency.

If a user is interested in an object (e. g., a product) in a target page, and wants to view more information about the object, an operation may be performed on the target page 701 with respect to the panel hot zone 703. After the operation, the information region (the panel hot zone 703) is enlarged, and basic information displayed in the information region is adjusted to be detailed information, so that the user can conveniently understand more informative information.

As shown in FIG. 8, in some embodiments, a target page 801 includes a video region 802, a panel hot zone 803, and an information region 804, where display content of the information region 804 is basic information of an object. That is, the target page 801 is divided into a video region 802 of the video content of the display object, an information region 804 of the basic information of the display object, and a panel hot zone 803. After an operation is performed on the panel hot zone 803, the information region 804 is enlarged, and basic information displayed in the information region 804 is adjusted to be detailed information. In this implementation, the video content and the key basic information of the object may be simultaneously displayed in the target page 801. Furthermore, the panel hot zone 803 and the information region 804 are set independently, so that the page layout is more flexible and diverse to conveniently satisfy operation preferences of different users. For example, the page layout may be in various forms where the panel hot zone is vertically adjacent to or horizontally adjacent to the information region, the panel hot zone is provided in a certain sub-region of the information region in the form of a scroll bar, the panel hot zone is provided on a page in a movable manner under a trigger operation, and so on, The above descriptions are just for example. The layout form of the panel hot zone and the information region in the page may be set according to various conditions such as page sizes, user operation preferences, etc. This is not limited in embodiments of the present disclosure.

In embodiments of the present disclosure, the target page may include a video region and a panel hot zone, or include the video region, the panel hot zone and an information region showing basic information, or include the video region and the panel hot zone which may also be an information region showing basic information. The page layout form of each region may be set flexibly, and may also be set as a configurable form. A user customizes a layout configuration tailored to individual preferences, and the display modes of respective regions are not specifically limited. For example, in the target page, the video region, the panel hot zone and the information region are sequentially arranged from top to bottom. Alternatively, the video region is arranged at the upper part of the target page, the information region is arranged at the lower part of the target page, and the panel hot zone is arranged in a predetermined sub-region of the information region. It may also be that the video region is arranged in the upper part of the target page, the information region is arranged in the lower part of the target page, and the panel hot zone is displayed in the page as a movable region according to the trigger action of the user, and so on.

In some application scenarios, the target page is a product live page or a product short video page, and the target object is a product to be promoted, video content related to the product is displayed in a video region, and detailed information related to the product is displayed in an information region. In addition to the critical basic information, the detailed information further include at least one of the following information: logistics information, evaluation information, discount information, entitlement information, attribute information, shop information, prompt information and other information about the product. The specific content of the listed information is provided according to specific conditions of the object. Detailed examples are not illustrated here and no limitations are suggested.

In some embodiments, a target video includes at least one video clip, where each video clip is used for displaying detailed information about a target object, and respective video clips display different detailed information. In response to that the target video is displayed in the video region, the video region is provided with at least one content control and a progress bar corresponding to each content control, each content control respectively corresponding to a video clip, each content control being used for triggering playing of a corresponding video clip, and the progress bar being used for displaying a playing progress of the video clip which is triggered to be played.

The detailed information about the target object is information capable of representing a fine feature of the object, for example, if the target object is a clothing product, the detailed information about the clothing product comprises fabric, design characteristics, accessories, a fitting effect, etc.; and if the target object is a food product, detailed information about the food product comprises ingredients introduction, a production date, a production place, nutritional value, etc. The user may better understand the characteristics of the product by means of the detailed information, so as to provide support for a purchase decision.

In conjunction with what is shown in FIG. 4, in the case where a video region 402 displays a target video, the video region 402 is provided with a plurality of content controls 404 related to the target video, each content control corresponding to a video clip. After an operation is performed on the content controls, the video clip corresponding to the content control is played in the video region, and the playing progress of the video clip is displayed using a progress bar 405 corresponding to the content control. For example, the video content of a certain product includes a plurality of video clips, including a video clip for displaying a fitting effect, a video clip for displaying fabric details, and a video clip for displaying size details. A fitting effect control, a fabric details control and a size details control are provided in the video region 402. When the fitting effect control is clicked, the video region 402 plays the video clip of the systemic effect, and the playback progress of the video clip is displayed with the progress bar 405. In this way, a user may view complete video content in a video region, and may also rapidly view a content of interest by operating a control, thereby improving user experience.

In some embodiments, the method of information display further includes:
screening out a comment of the target object according to a predetermined rule; and
in response to that the target video is displayed in the video region, displaying the comment in a predetermined sub-region within the video region.

In this embodiment, a comment related to the object may also be displayed in the video region, and the comment that needs to be displayed is determined first according to a specific rule. For example, the latest comments are selected, or comments that emphasize the product's features are selected, or comments having high scores are selected as comments that need to be displayed. These comments may be displayed in a predetermined sub-region of a video region to facilitate the user to obtain more comprehensive information on the page. When wanting to view more comprehensive comments, a user may enter a comment details page by clicking a predetermined sub-region to view all the comments. Optionally, a comment may be displayed in the predetermined sub-region with a certain transparency, and the video content and the comment may be displayed at the same time.

In some embodiments, a picture browsing control is provided in a video region. By triggering the picture browsing control, at least one picture of a target object may be switched and displayed in the video region. When pictures are viewed, different pictures may be switched and viewed by sliding left or right in the video region.

In some embodiments, a target video in a video region may be switched by sliding up and down in the video region. When there is an information region in a page, detailed information about a target object corresponding to the target video in the information region is synchronously switched. That is, the objects displayed in the page may be switched by the slide operation in the video region. For example, when the video content of the product A is displayed in the video region in the current page, the information region displays detailed information about the product A. When a slide up and down operation is performed with respect to the video region, the video content displayed in the video region is switched to the video content of product B, and the detailed information displayed in the information region is switched to the detailed information of product B. In this way, the user can switch to view different objects by performing the slide operation in the video region.

Embodiments of the present disclosure provides a method of information display, which displays an information region including detailed information of an object in the target page in response to triggering of a panel hot zone in the target page. As such, if a user is interested in the object, it is possible to obtain all the contents of a related object in one page without opening a details page of the related object any more. Furthermore, key actions may be completed by means of action points of the information region, which is convenient to operate and improves the user experience.

It should be noted that the method according to embodiments of the present disclosure may be executed by a single device, such as a computer or a server. The method in the embodiments may also be applied to a distributed scenario, and implemented by a plurality of devices cooperating with each other. In the distributed scenario, one of the plurality of devices may perform only one or more steps of the method according to the embodiments of the present disclosure, and the plurality of devices may interact with each other to implement the method.

It should be noted that, some embodiments of the present disclosure are described above, and other embodiments are within the scope of the appended claims. In some cases, the actions or steps recited in the claims may be performed in a different order than in the embodiments described above and still achieve desirable results. In addition, the processes depicted in the figures do not necessarily require the particular order shown, or sequential order, to achieve expected results. In certain embodiments, multitasking and parallel processing may also or may be advantageous.

Based on the same inventive concept, corresponding to the method of any embodiment, the present disclosure also provides an apparatus for information display.

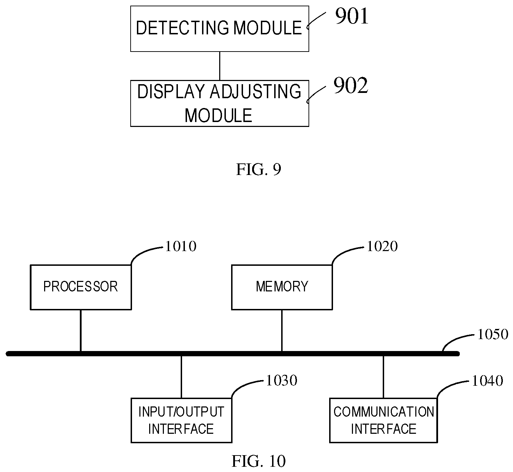

Referring to FIG. 9, the apparatus for information display includes:
a detecting module 901 configured for detecting a first operation for a panel hot zone in a target page, wherein the target page comprises a video region and the panel hot zone, and the video region is used for displaying a target video; and
a display adjusting module 902 configured for displaying an information region in a target page and adjusting a display mode of a video region in response to a first operation, wherein the information region is used to display detailed information of the target object corresponding to the target video.

For ease of description, the foregoing apparatus is described by dividing functions into various modules for separate description. Definitely, when the present disclosure is implemented, functions of each module may be implemented in one or more pieces of software and/or hardware.

The device of the above embodiments is used for implementing the corresponding pop-up effect presentation method in any of the described embodiments, and has the beneficial effect of the corresponding method embodiments, which will not be repeated here.

Based on the same inventive concept, corresponding to the method of any of the described embodiments, the present disclosure also provides an electronic device, comprising a memory, a processor and a computer program stored in the memory and operable on the processor, wherein when executing the program, the processor realizes the method of information display of any of the described embodiments.

FIG. 10 is a schematic structural diagram of more specific hardware of an electronic device according to an embodiment of the present invention. The device may include: a processor 1010, a memory 1020, an input/output interface 1030, a communication interface 1040, and a bus 1050. The processor 1010, the memory 1020, the input/output interface 1030, and the communication interface 1040 are connected to each other inside the device through the bus 1050.

The processor 1010 may be implemented by using a universal CPU (Central Processing Unit, central processing unit), a microprocessor, an application specific integrated circuit (Application Specific Integrated Circuit, ASIC), or one or more integrated circuits, and is configured to execute a relevant program, so as to implement the technical solutions provided in embodiments of the present disclosure.

The memory 1020 may be implemented in the form of a ROM (Read Only Memory, read only memory), a RAM (Random Access Memory, random access memory), a static storage device, and a dynamic storage device. The memory 1020 may store an operating system and other application programs. When the technical solutions provided in the embodiments of the present invention are implemented by software or firmware, related program codes are stored in the memory 1020 and invoked and executed by the processor 1010.

The input/output interface 1030 is configured to connect to an input/output module to input and output information. The input/output module may be configured in a device (not shown in the figure) as a component, and may also be externally connected to the device to provide corresponding functions. The input device may include a keyboard, a mouse, a touch screen, a microphone, various sensors, and the like, and the output device may include a display, a speaker, a vibrator, an indicator lamp, and the like.

The communication interface 1040 is configured to connect to a communications module (not shown in the figure), so as to implement communication and interaction between this device and another device. The communication module may implement communication in a wired manner (such as a USB and a network cable), and may also implement communication in a wireless manner (such as a mobile network, WIFI, and Bluetooth).

The bus 1050 may comprise a pathway that may enable communication of information between various components of the device, for example, the processor 1010, the memory 1020, the input/output interface 1030, and the communication interface 1040.

It should be noted that, although the foregoing device only shows the processor 1010, the memory 1020, the input/output interface 1030, the communication interface 1040, and the bus 1050, in a specific implementation process, the device may further include other components necessary for implementing normal running. In addition, a person skilled in the art may understand that the foregoing device may also only include components necessary for implementing solutions of embodiments of the present specification, and does not necessarily include all components shown in the figure.

The electronic device in the foregoing embodiment is configured to implement the corresponding method of information display in any of the foregoing embodiments, and has beneficial effects of the corresponding method embodiments, which are not described herein again.

Based on the same inventive concept, corresponding to the method of any of the above embodiments, the present disclosure further provides a non-transitory computer-readable storage medium. The non-transitory computer-readable storage medium stores computer instructions. The computer instructions are used for enabling the computer to execute the method of information display of any of the above embodiments.

The computer readable media of this embodiment, including both persistent and non-persistent, removable and non-removable media, may be any method or technology for storage of information. The information may be computer readable instructions, data structures, modules of a program, or other data. Examples of computer storage media include, but not limited to phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only compact disc read-only memory (CD-ROM), digital versatile discs (DVD) or other optical storage, magnetic cassettes, Magnetic tape magnetic disk storage or other magnetic storage devices, or any other non-transmission medium, may be used to store information that may be accessed by a computing device.

The computer instruction stored in the storage medium in the foregoing embodiment is used to enable the computer to execute the method of information display in any of the foregoing embodiments, and has beneficial effects of a corresponding method embodiment, which are not repeated herein.

It should be noted that, unless otherwise defined, technical terms or scientific terms used in the embodiments of the present disclosure should have a common meaning understood by those skilled in the art. The terms "first", "second", and the like used in the embodiments of the present disclosure do not indicate any order, quantity, or importance, but are only used to distinguish different components. Words of "including" or "including" and the like mean that the element or item before the word appears to encompass the element or item listed after the word and equivalents thereof, without excluding other elements or items. Words such as "connected" or "connected" are not limited to physical or mechanical connections, but may include electrical connections, whether direct or indirect. The articles 'a' or 'an' preceding an element do not exclude the presence of a plurality of such elements.

Although the spirit and principle of the present disclosure have been described with reference to several specific implementations, it should be understood that the present disclosure is not limited to the disclosed specific implementations, and the division of aspects does not mean that features in these aspects cannot be combined to benefit, and the division is only for convenience of description. The present disclosure is intended to cover various modifications and equivalent arrangements included within the spirit and scope of the appended claims. The scope of the appended claims is to be accorded the broadest interpretation so as to encompass all such modifications and equivalent structures and functions.

## Claims

1. A method of information display, comprising:
detecting a first operation for a panel hot zone in a target page, the target page comprising a video region and the panel hot zone, and the video region being used for displaying a target video; and
in response to the first operation, displaying an information region in the target page, and adjusting a display mode of the video region, wherein the information region is used to display detailed information about a target object corresponding to the target video.

2. The method of claim 1, wherein the adjusting a display mode of the video region comprises:
reducing a display area of the video region in the target page, wherein the reduced video region is used for displaying content associated with the target video.

3. The method of claim 1, wherein the adjusting a display mode of the video region comprises:
adjusting the video region into a video play control, wherein the video play control is used for displaying the video region in the target page in response to a trigger operation.

4. The method of any of claims 1-3, wherein the first operation comprises a sliding operation, and the in response to the first operation, displaying an information region on the target page comprises:
in response to the sliding operation, determining a sliding distance corresponding to the sliding operation;
determining a target display area of the information region based on the sliding distance; and
displaying the information region in the target page, wherein a display area of the information region in the target page is the target display area.

5. The method of claim 4, wherein the determining a target display area of the information region based on the sliding distance comprises:
if the sliding distance is less than or equal to a predetermined distance threshold, determining the target display area of the information region based on the sliding distance; and
if the sliding distance is greater than the predetermined distance threshold, determining the target display area of the information region based on the distance threshold.

6. The method of any of claims 1 to 3, wherein the panel hot zone is an information region for displaying basic information of the target object, and
wherein the in response to the first operation, displaying an information region in the target page comprises:
in response to the first operation, increasing a display area of the information region in the target page; and
adjusting content displayed in the increased information region to be the detailed information about the target object corresponding to the target video.

7. The method of any of claims 1 to 3, wherein the target video comprises at least one video clip, each video clip is used to display detailed information about the target object, and respective video clips display different detailed information;
wherein in response to that the target video is displayed in the video region, the video region is provided with at least one content control and a progress bar corresponding to each content control, each content control corresponding to a video clip, each content control being used for triggering playing of a corresponding video clip, and the progress bar being used for displaying a playing progress of the video clip which is triggered to be played.

8. The method of any of claims 1 to 3, further comprising:
screening out a comment of the target object according to a predetermined rule; and
in response to that the target video is displayed in the video region, displaying the comment in a predetermined sub-region within the video region.

9. The method of claim 3, wherein the video play control comprises at least one of the following:
a playing key for resuming playing of the target video,
a selection key for restoring a displaying manner of the video region, or
a scroll control key for viewing the target video.

10. The method of any of claims 1 to 3, wherein a picture browsing control is provided in the video region, and the method further comprises:
in response to the picture browsing control being triggered, displaying at least one picture of the target object in the video region.

11. An apparatus of information display, comprising:
a detecting module configured for detecting a first operation for a panel hot zone in a target page, the target page comprising a video region and the panel hot zone, and the video region being used for displaying a target video; and
a display adjusting module configured for displaying an information region in the target page in response to the first operation, and adjusting a display mode of the video regio, wherein the information region is used to display detailed information about a target object corresponding to the target video.

12. An electronic device, comprising:
a memory, a processor, and a computer program stored in the memory and run on the processor, the processor, when executing the program, implementing the method of any of claims 1 to 10.

13. A non-transitory computer readable storage medium, wherein the non-transitory computer readable storage medium stores computer instructions, and the computer instructions are used to cause a computer to implement the method of any of claims 1 to 10.

14. A computer program product comprising a computer program or instructions, the computer program or instructions, when executed by a processor, implementing the method of any of claims 1-10.

15. A computer program, comprising: instructions that when executed by a processor cause the processor to implement the method of any of claims 1-10.
